# EUROPEAN PATENT APPLICATION

(11) **EP 3 832 139 A1**
(43) Date of publication of application: **09.06.2021**
(21) Application number: 20210529.2
(22) Date of filing: 30.11.2020
(51) Int. Cl.: F04D 19/00

(54) **HIGH SPEED FAN WITH BEARING DAMPERS**

(30) Priority: 03.12.2019 CN 201911219908; 10.09.2020 CN 202021976528 U
(71) Applicant: China Drive Motors (Shenzhen) Co., Ltd., Shenzhen, Guangdong (CN)
(72) Inventor: ZHONG, Pingxian, Shenzhen, Guangdong (CN); KUANG, Gangyao, Shenzhen, Guangdong (CN); ZHANG, Qiaomei, Shenzhen, Guangdong (CN)
(74) Representative: Tiburzi, Andrea

(57) **Abstract**

A high-speed fan motor, including an air duct motor casing, fan blades, a motor stator, a motor rotating shaft, a rear end cover, and a PCB, wherein the motor stator is installed in the air duct motor casing, the air duct motor casing is internally provided with a plurality of arc-shaped radial positioning plates for fixing the motor stator, the plurality of arc-shaped radial positioning plates surround the periphery of the motor stator, one end of the rear end cover is axially connected to the motor stator and/or the air duct motor casing, while the other end of the rear end cover is connected to the PCB, the plurality of arc-shaped radial positioning plates and the rear end cover surround to form an installation structure for installing the motor stator, a first bearing and a second bearing are provided at two ends of the motor rotating shaft, respectively, a first bearing chamber is provided inside the air duct motor casing, a second bearing chamber is provided inside the rear end cover, and a first damping bushing and a second damping bushing are installed in the first bearing chamber and the second bearing chamber, respectively. Compared with the prior art, the high-speed fan motor disclosed herein starts with lower noise and is installed with higher stability and reliability.

## Description

### FIELD OF THE DISCLOSURE

The present disclosure relates to the technical field of motors, in particular to a high-speed fan motor.

### BACKGROUND OF THE DISCLOSURE

At present, motors used for hair dryers, bladeless fans, vacuum cleaners, hand dryers, and bathroom dryers are generally of single cantilever beam structure. The single cantilever beam structure tends to cause eccentricity, and when a high-speed motor starts, the rotor of the single cantilever beam is under the action of magnetic field and therefore is subjected to a great radial force. In addition, in the single cantilever structure, even if stator fixing means are added, it still cannot completely prevent the rotor from swinging when the motor starts, so that the motor may start with great noise. In order to reduce the shaking of the single cantilever arm structure, the rotor of the motor is located distant from the two bearings, and with the length of the rotor, the overall height of the motor is great.

In order to reduce axial displacement of the motor, it is usually fixed by glue. However, the fixation with glue cannot be detached, and once a problem occurs, it causes scrapped material, while in other cases where an operator operates improperly, it is not firmly fixed with glue, the sound may be changed, resulting in more noise, or even failure of the motor.

At present, a bearing baffle is generally installed in the middle of the motor, so that the axial length is increased, and the installation space is limited.

In addition, for a high-speed motor of 5-150,000 rpm, assuming with a concentricity of 0.01, may swing at 1,000-2,000 Hz, so that a high-frequency sound (metal sound) is generated, which is very stinging and uncomfortable. In order to reduce swing, in the prior art, springs or wave washes are generally used for providing pre-stress for bearings, and the metal material is in direct contact with the bearing steel, therefore, glue is used for fixing the bearings and bearing chambers to prevent abrasion in the high-speed condition. However, when fixing with glue, if too much glue is used, the glue will flow into the bearings and makes the motor blocked, and if less glue is used, the glue will lose efficacy after long-time use, leading to abrasion of the motor casing or the end cover, which causes abnormal sound or jamming of the motor.

### SUMMARY OF THE DISCLOSURE

A main object of the present disclosure is to provide a high-speed fan motor to reduce noise generated when the motor starts, reduce high-frequency sound caused by swing and reduce the decibel of noise generated during operation of the motor, and improve the stability and reliability of installation so as to prevent the problem of abnormal sound or jamming of the motor caused by abrasion of the motor casing or the end cover.

In order to achieve the above object, the present disclosure provides a high-speed fan motor.

### BRIEF DESCRIPTION OF DRAWINGS

In order to more clearly illustrate the embodiments of the present disclosure or the prior art, the accompanying drawings, which are incorporated in the description of the embodiments or the prior art, will now be described briefly. It is obvious that the drawings in the following description are only some embodiments of the disclosure, and that those skilled in the art can obtain other drawings from the structures shown in these drawings without involving any inventive effort.
FIG. 1 shows a cross-sectional view of a high-speed fan motor according to a preferred embodiment of the present disclosure;
FIG. 2 shows an exploded view of the high-speed fan motor according to the preferred embodiment of the present disclosure;
FIG. 3 shows a schematic diagram showing the overall structure of the high-speed fan motor according to the preferred embodiment of the present disclosure;
FIG. 4 shows a sectional view taken along line C-C of FIG. 3;
Fig. 5 shows a schematic diagram showing the structure of a rotor of the high-speed fan motor according to the preferred embodiment of the present disclosure;
FIG. 6 shows a sectional view taken along line C-C of FIG. 5;
FIG. 7 shows a schematic diagram showing the structure of an air duct motor casing;
FIG. 8 shows a sectional view taken along line D-D of FIG. 7;

### Reference Signs:

| No. | Name | No. | Name |
|---|---|---|---|
| 10 | Air duct motor casing | 404 | First damping bushing |
| 20 | Fan blade | 405 | Second damping bushing |
| 30 | Motor stator | 50 | Rear end cover |
| 40 | Motor rotor | 60 | Assistant bearing |
| 401 | Motor rotating shaft | 70 | Screw |
| 402 | First bearing | 80 | Magnetic ring |
| 403 | Second bearing | | |

The implementation of the objects, functional features and advantages of the disclosure will be further elucidated with reference to the embodiments described hereinafter and with reference to the accompanying drawings.

### DETAILED DESCRIPTION OF THE EMBODIMENTS

The embodiments of the present disclosure will now be described more fully hereinafter with reference to the accompanying drawings. It is to be understood that the described embodiments are only a few, but not all, embodiments of the disclosure. Based on the embodiments of the present disclosure, all other embodiments obtained by those skilled in the art without involving any inventive effort are within the scope of the present disclosure.

It is to be noted that, if a directional indication, such as up, down, left, right, front, rear..., is involved in embodiments of the present disclosure, the directional indication is only used for explaining a relative positional relationship between components in a certain posture (as shown in the drawings), a motion situation, and the like, and if the certain posture is changed, the directional indication is changed accordingly.

In addition, if a description of "first", "second", etc. is referred to in embodiments of the present disclosure, the description of "first", "second", etc. is used for descriptive purposes only and is not to be construed as indicating or implying relative importance or implicitly indicating the number of technical features indicated. Thus, features defining "first" and "second" may explicitly or implicitly include at least one such feature. In addition, the meaning of "and/or" appearing throughout includes three side-by-side schemes, exemplified by "A and/or B", including scheme A, or scheme B, or schemes satisfied by both A and B. In addition, the technical schemes of the various embodiments can be combined with each other, but must be realized by those skilled in the art, and when the combination of the technical solutions contradicts each other or cannot be realized, the combination of the technical solutions should not be considered to exist, nor be within the scope of protection of the present disclosure.

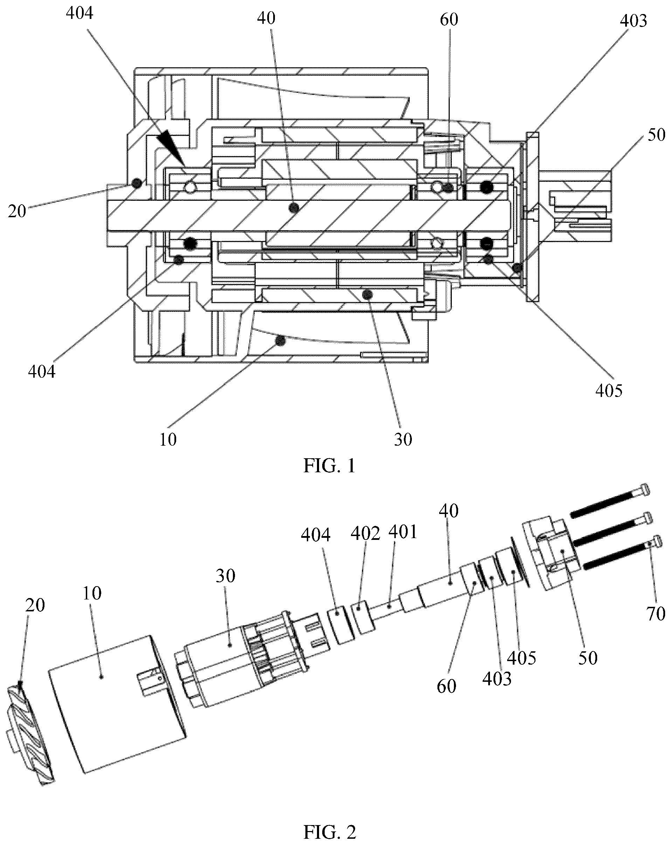

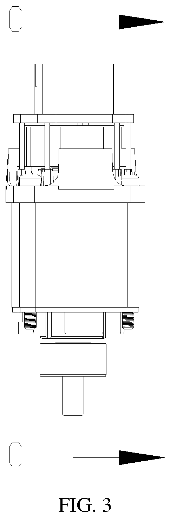

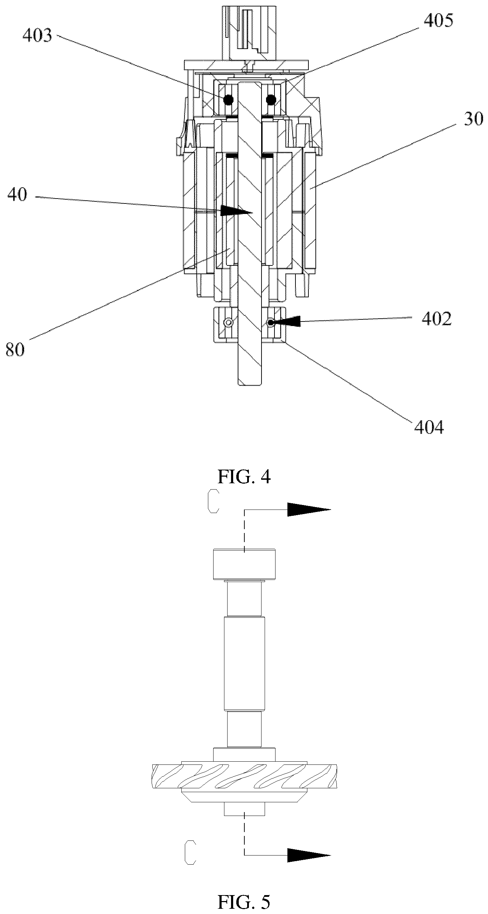

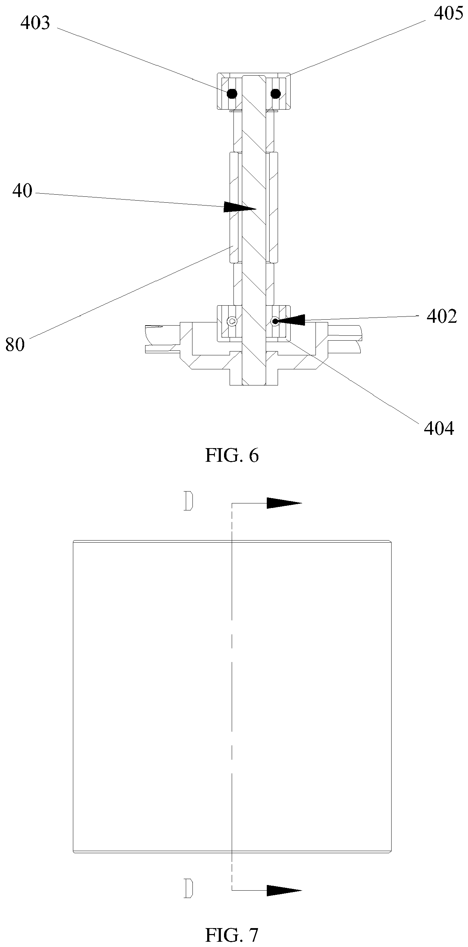

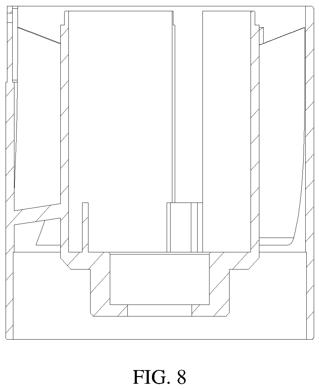

Referring to FIGs. 1 to 8, the present disclosure provides a high-speed fan motor. According to a preferred embodiment, the high-speed fan motor includes an air duct motor casing 10, fan blades 20, a motor stator 30, a motor rotor 40, a motor rotating shaft 401, a rear end cover 50, and a PCB. The motor stator 30 is installed in the air duct motor casing 10, and the fan blades 20, the motor stator 30, the motor rotor 40, the motor rotating shaft 401, the rear end cover 50, and the PCB are coaxially arranged. Among others, the motor stator 30 may be integrally formed through iron core in-mold injection molding.

In this embodiment, the motor rotates at a speed of 50,000 rpm to 150,000 rpm.

The fan blades 20, the motor stator 30, the motor rotor 40, the motor rotating shaft 401, the rear end cover 50, and the PCB are coaxially arranged, so that the shaking occurring when the motor starts can be effectively prevented, and the starting noise is reduced.

An output end of the motor rotating shaft 401 is connected to the fan blades 20, The air duct motor casing 10 is internally provided with a plurality of arc-shaped or cylindrical radial positioning plates for fixing the motor stator 30, the plurality of arc-shaped or cylindrical radial positioning plates surround the periphery of the motor stator 30, one end of the rear end cover 50 is axially connected to the motor stator 30 and/or the air duct motor casing 10, while the other end of the rear end cover is connected to the PCB, and the plurality of arc-shaped radial positioning plates and the rear end cover 50 surround to form an installation structure for installing the motor stator 30.

It is worthy to propose that the installation structure formed by the surrounding of the plurality of arc-shaped radial positioning plates and the rear end cover 50 is a approximately fully enclosed structure, and the motor stator 30 is installed in the approximately fully enclosed installation structure, so that the radial positioning of the motor stator 30 is more accurate than in the prior art, and the motor is prevented from shaking when subjected to a force.

In addition, to install the rear end cover 50, the rear end cover 50 may be firstly installed on the motor stator 30 with screws 80, and then installed on the air duct motor casing 10; alternatively, the rear end cover 50 and the motor stator 30 are combined as a whole and then installed in the air duct motor casing 10; and alternatively, only the rear end cover 50 is installed on the air duct motor casing 10, and the motor stator 30 is installed in the air duct motor casing 10, which is not limited in this embodiment. These installation methods can ensure the mechanical axial fixing of the motor, thereby being more stable and reliable than the tight fitting or glue fixation in the prior art. In addition, installation methods are also more convenient to operate, time-saving and labor-saving.

In this embodiment, a first bearing 402 and a second bearing 403 are provided at two ends of the motor rotating shaft, respectively, a first bearing chamber for installing the first bearing 402 is provided inside the air duct motor casing, a second bearing chamber for installing the second bearing 403 is provided inside the rear end cover, a first damping bushing 404 and a second damping bushing 405 are installed in the first bearing chamber and the second bearing chamber, respectively, and the first damping bushing 404 and the second damping bushing 405 sleeve the first bearing 402 and the second bearing 403, respectively.

Among others, the first damping bushing 404 and the second damping bushing 405 are made of rubber or silicone or plastic.

According to this embodiment, the first bearing 402 is sleeved by the first damping bushing 404, and the second bearing 403 is sleeved by the second damping bushing 405. As the first damping bushing 404 and the second damping bushing 405 are resilient, there is no hard contact, and a rebound force is generated when pre-stress is applied so as to serve as the pre-stress for the first bearing 402 and the second bearing 403. Therefore, under high-frequency vibration, high-frequency sound caused by swing and high-speed operation of the first bearing 402 and the second bearing 403 when the motor operates can be reduced, and the problem of abnormal sound or jamming of the motor caused by abrasion of the motor casing or the rear end cover 50 can be prevented.

In addition, with the first damping bushing 404 and the second damping bushing 405 added, due to the damping feature of rubber, silicon or plastic, it needs not to use glue, so that the failure rate can be reduced, and the cost is reduced.

In order to make the rotation of the motor rotating shaft more stable and reliable, in particular implementation, an assistant bearing 60 may be arranged on the motor shaft 401 at a position close to the second bearing 403 (generally, the assistant bearing 60 is not needed, and also may be added as needed, for the purposes of shortening the force arm of the shaft, increasing the strength, and reducing noise).

It will be appreciated that the high-speed fan motor proposed by the present disclosure is applicable to the fields of hair dryers, bladeless fans, vacuum cleaners, hand dryers, bathroom dryers, etc., wherein the high-speed fan motor may rotate at a speed of, for example, 50,000 rpm to 150,000 rpm.

Further, in this embodiment, the rear end cover 50 is made of plastic or metal material. Compared with the prior art, the use of the rear end cover 50 completely improves the long cantilever structure of the rotor, and thoroughly solves the problem of abnormal sound generated when the high-speed motor starts.

Further, in this embodiment, a plurality of stator fixing members are connected to an inner wall of the air duct motor casing 10, and the motor stator 30 is axially connected with the plurality of stator fixing members by screws 70. The plurality of stator fixing members, the plurality of arc-shaped radial positioning plates and the air duct motor casing 10 are integrally formed. Thereby, more stable and reliable installation of the motor stator 30 in the air duct motor casing 10 can be ensured.

Further, in this present embodiment, a plurality of air guide plates are uniformly disposed in the air duct motor casing 10, and the count of the air guide plates may be preferably 7 or 9.

Further, in this embodiment, the fan blades 20 are Archimedean spiral shaped.

The high-speed fan motor provided by the present disclosure has the following beneficial effects: according to the technical scheme described above, the high-speed fan motor includes an air duct motor casing, fan blades, a motor stator, a motor rotating shaft, a rear end cover, and a PCB, the motor stator is installed in the air duct motor casing, the fan blades, the motor stator, the motor rotating shaft, the rear end cover and the PCB are coaxially arranged, an output of the motor rotating shaft is connected to the fan blades, the air duct motor casing is internally provided with a plurality of arc-shaped radial positioning plates for fixing the motor stator, the plurality of arc-shaped radial positioning plates surround the periphery of the motor stator, one end of the rear end cover is axially connected to the motor stator and/or the air duct motor casing, while the other end of the rear end cover is connected to the PCB, the plurality of arc-shaped radial positioning plates and the rear end cover surround to form an installation structure for installing the motor stator, a first bearing and a second bearing are provided at two ends of the motor rotating shaft, respectively, a first bearing chamber for installing the first bearing is provided inside the air duct motor casing, a second bearing chamber for installing the second bearing is provided inside the rear end cover, a first damping bushing and a second damping bushing are installed in the first bearing chamber and the second bearing chamber, respectively, and the first damping bushing and the second damping bushing sleeve the first bearing and the second bearing, respectively. Compared with the prior art, sound generated when the motor starts is reduced, the problem of abnormal sound or jamming of the motor caused by abrasion of the motor casing or the rear end cover can be prevented, and installation is more stable and reliable.

The foregoing is only a preferred embodiment of the disclosure and is not intended to limit the scope of the disclosure, and all equivalent structural transformations made with the present specification and the accompanying drawings without departing from the spirit of the present disclosure, or applications, either direct or indirect, in other related fields are included within the scope of the present disclosure.

## Claims

1. A high-speed fan motor, comprising: an air duct motor casing, fan blades, a motor stator, a motor rotating shaft, a rear end cover, and a PCB, wherein the motor stator is installed in the air duct motor casing, the fan blades, the motor stator, the motor rotating shaft, the rear end cover and the PCB are coaxially arranged, an output of the motor rotating shaft is connected to the fan blades, the air duct motor casing is internally provided with a plurality of arc-shaped radial positioning plates for fixing the motor stator, the plurality of arc-shaped radial positioning plates surround the periphery of the motor stator, one end of the rear end cover is axially connected to the motor stator and/or the air duct motor casing, while the other end of the rear end cover is connected to the PCB, and the plurality of arc-shaped radial positioning plates and the rear end cover surround an installation structure configured for installing the motor stator; and
a first bearing and a second bearing are provided at two ends of the motor rotating shaft, respectively, a first bearing chamber for installing the first bearing is provided inside the air duct motor casing, a second bearing chamber for installing the second bearing is provided inside the rear end cover, a first damping bushing and a second damping bushing are installed in the first bearing chamber and the second bearing chamber, respectively, and the first damping bushing and the second damping bushing sleeve the first bearing and the second bearing, respectively.

2. The high-speed fan motor of claim 1, wherein the first damping bushing and the second damping bushing are made of rubber or silicone or plastic.

3. The high-speed fan motor of claim 1, wherein the rear end cover is made of plastic or metal material.

4. The high-speed fan motor of claim 1, wherein a plurality of stator fixing members are connected to an inner wall of the air duct motor casing, and the motor stator is axially connected with the plurality of stator fixing members by screws.

5. The high-speed fan motor of claim 4, wherein the plurality of stator fixing members, the plurality of arc-shaped radial positioning plates and the air duct motor casing are integrally formed.

6. The high-speed fan motor of claim 1, wherein a plurality of air guide plates are uniformly disposed in the air duct motor casing.

7. The high-speed fan motor of claim 6, wherein the count of the air guide plates is 7 or 9.

8. The high-speed fan motor of claim 1, wherein the fan blades are Archimedean spiral shaped.

9. The high-speed fan motor of claim 1, wherein the motor stator is integrally formed through iron core in-mold injection molding.

10. The high-speed fan motor of claim 1, wherein the motor rotates at a speed of 50,000 rpm to 150,000 rpm.
